# EUROPÄISCHE PATENTSCHRIFT

(11) **EP 2 042 407 B1**
(45) Veröffentlichungstag und Bekanntmachung des Hinweises auf die Patenterteilung: **13.11.2013**
(21) Anmeldenummer: 08162952.9
(22) Anmeldetag: 26.08.2008
(51) Int. Cl.: B62D 6/00, B62D 5/04, B60G 9/00, B62D 5/00

(54) **Landwirtschaftliches Fahrzeug mit seinem Lenksystem**
Agricultural vehicle with its steering system
Véhicule agricole avec son sytème de direction

(30) Priorität: 25.09.2007 DE 102007045781
(43) Veröffentlichungstag der Anmeldung: 01.04.2009
(73) Patentinhaber: Deere & Company, Moline, IL 61265-8098 (US)
(72) Erfinder: Reinards, Marco, 54608, Bleialf (DE); Scheff, Udo, 67549, Worms (DE)
(74) Vertreter: Holst, Sönke

(56) Entgegenhaltungen:
- EP-A1- 1 800 991
- DE-A1- 10 221 721
- DE-A1-102005 038 390

## Beschreibung

Die Erfindung betrifft ein landwirtschaftliches Fahrzeug mit einem Fahrzeugrahmen, wenigstens einer Fahrzeugachse, die wenigstens einen mit einem Rad bestückten Achsschenkel aufweist, wobei die wenigstens eine Fahrzeugsachse gegenüber dem Rahmen vertikal bewegbar aufgehängt ist und Rad über eine Achsschenkellenkung lenkbar angeordnet ist, einer elektronischen Steuereinheit und einem an der Achsschenkellenkung einen Lenkeinschlag erzeugendem Lenksystem, wobei das Lenksystem eine von einer Bedienperson bedienbare und eine Stellgröße erzeugende erste Lenkeinrichtung sowie eine zweite Lenkeinrichtung umfasst, wobei die zweite Lenkeinrichtung von einem von der elektronischen Steuereinheit ansteuerbarem Aktuator betreibbar ist, der eine zweite Stellgröße erzeugt, wobei die Stellgrößen beider Lenkeinrichtungen zu einer den Lenkeinschlag an der Achsschenkellenkung erzeugenden Gesamtstellgröße überlagerbar sind und wobei Mittel zur Erfassung des aktuellen Lenkeinschlags und Mittel zur Erfassung der aktuellen Position der wenigstens einen Fahrzeugachse relativ zum Fahrzeugrahmen vorgesehen sind, und die Steuereinheit derart ausgebildet ist, dass durch Ansteuerung des Aktuators eine Begrenzung des Lenkeinschlags in Abhängigkeit von dem aktuellen Lenkeinschlag und von der aktuellen Position der wenigstens einen Fahrzeugachse erzielbar ist.

Bei Fahrzeugen mit Achsschenkellenkung in Verbindung mit pendelnd und/oder federnd aufgehängter Fahrzeugachse wird der maximale Lenkeinschlag bzw. maximale Lenkwinkel üblicherweise rein mechanisch durch (verstellbare) starre Anschläge am Fahrzeugrahmen begrenzt. Der maximale Lenkeinschlag bzw. maximale Lenkwinkel muss dabei so eingestellt werden, dass in_keiner möglichen Position von Fahrzeugachse zu Fahrzeugrahmen ein Kontakt zwischen Fahrzeugrumpf (Rahmen, Haube etc.) und Räder eintritt, der zu einer Beschädigung der Komponenten am Fahrzeug führen könnte.

Durch die am Fahrzeugrahmen angeordneten starren mechanischen Anschläge wird über breite Bereiche ein möglicher Lenkeinschlag verschenkt und der Wenderadius des Fahrzeugs unnötig vergrößert.

Es sind ferner elektromechanische oder elektrohydraulische Lenksysteme bekannt, die durch Überlagerung des von einer Bedienperson initiierten Lenksignals einer ersten Lenkeinrichtung mit einem zusätzlichen Stellsignal einer zweiten Lenkeinrichtung die Lenkung am Fahrzeug erzeugen. So wird in der DE 10 2004 027 586 beschrieben, dass durch ein Überlagerungssteller im Lenksystem eine Hilfskrafteinrichtung geschaffen wird, durch die eine Hilfskraft zur Fahrer unabhängigen Korrektur des Lenkmoments erzeugt wird, um den Fahrer gegen unerwartet auftretende Rückwirkungsmomente zu schützen. Das derartige System ist jedoch zur Begrenzung des Lenkeinschlags an einer Fahrzeugachse ungeeignet.

Ferner wird in der DE 196 01 826 A1 ein Lenksystem für ein Kraftfahrzeug offenbart, welches ein mit einem Lenkgetriebe gekoppeltes Überlagerungsgetriebe aufweist. Mittels des Überlagerungsgetriebes findet hier eine Überlagerung einer durch den Fahrer initiierten Lenkbewegung einer ersten Lenkeinrichtung mit einer durch ein Stellglied initiierten Bewegung einer zweiten Lenkeinrichtung statt, um eine variable Auslegung der an sich konstant ausgelegten mechanischen Übersetzung des Lenkgetriebes zu schaffen. Auch mit diesem elektromechanischen Lenksystem ist eine Begrenzung des Lenkeinschlags wie oben beschrieben nicht realisierbar.

Ferner offenbart die DE 10 2005 038390 A1 eine Lenkvorrichtung für Fahrzeuge, insbesondere Straßenkraftfahrzeuge, mit einer Betätigungseinrichtung, wobei durch die Betätigungseinrichtung ein Lenkwinkel zumindest eines lenkbaren Fahrzeugrades einstellbar ist. Durch eine Begrenzungseinrichtung soll ein maximal einstellbarer Lenkwinkel begrenzt werden, wobei die Begrenzungseinrichtung so ausgestaltet ist, dass der maximal einstellbare Lenkwinkel abhängig von einer Fahrsituation des Fahrzeuges begrenzt wird oder abhängig von der Fahrsituation auf unterschiedliche Werte begrenzt wird. Die hier offenbarte Lenkvorrichtung scheint für die Anwendung an Landmaschinen ungeeignet, insbesondere deswegen, weil von unterschiedlichen Radaufhängungen und Achsgestaltungen auszugehen ist.

Die der Erfindung zugrunde liegende Aufgabe wird darin gesehen, ein landwirtschaftliches Fahrzeug der eingangs genannten Art anzugeben, durch welches die vorgenannten Probleme überwunden werden.

Die Aufgabe wird erfindungsgemäß durch die Lehre des Patentanspruchs 1 gelöst.

Weitere vorteilhafte Ausgestaltungen und Weiterbildungen der Erfindung gehen aus den Unteransprüchen hervor.

Erfindungsgemäß umfasst ein landwirtschaftliches Fahrzeug der eingangs genannten Art eine Pendelachse mit wenigstens zwei mit einem Rad bestückten Achsschenkeln, wobei die Mittel zur Erfassung der aktuellen Position der Fahrzeugachse einen Pendelwinkel relativ zum Fahrzeugrahmen erfassen. Die Position der Fahrzeugachse relativ zum Fahrzeugrahmen (Schwenkwinkel bzw. Verschwenkwinkel, Pendelwinkel und/oder Federweg) wird über geeignete Mittel online bestimmt. In Abhängigkeit von den bestimmten bzw. gemessenen Werten bezüglich der Position der Fahrzeugachse relativ zum Fahrzeugrahmen wird der maximal erlaubte Lenkeinschlag ermittelt und der aktuell gemessene Lenkeinschlag gegebenenfalls korrigiert, sollte dieser den maximal erlaubten Lenkeinschlag übersteigen. Die Korrektur erfolgt durch Überlagerung der durch die Bedienperson initiierten Stellgröße mit der durch den Aktuator initiierten Stellgröße, so dass im Endergebnis in Abhängigkeit von der ermittelten Position der Fahrzeugachse der maximale Lenkeinschlag bzw. Lenkeinschlagwinkel an der Fahrzeugachse aktiv begrenzt wird. Die Bedienperson (Fahrer des Fahrzeugs) kann die Räder der Fahrzeugachse bis zum jeweils erlaubten maximalen Lenkeinschlag (Lenkeinschlagwinkel) einschlagen, der durch die Position der Fahrzeugachse vorgegeben bzw. bestimmt wird. Ändert sich nun die Position der Fahrzeugachse und damit der maximal erlaubte Lenkeinschlag (Lenkeinschlagwinkel), dann wird der tatsächliche Lenkeinschlag (Lenkeinschlagwinkel) dem maximal erlaubten Lenkeinschlag aktiv nachgefahren, d.h. es erfolgt eine Korrektur des Lenkeinschlags durch aktives Rücklenken, sofern der aktuelle Lenkeinschlag den maximal erlaubten Lenkeinschlag übersteigt. Dies geschieht wie oben beschrieben durch aktiven Eingriff des Aktuators in das Lenksystem. Vorzugsweise wird der aktuelle Lenkeinschlag bzw. Lenkwinkel aktiv lediglich verringert, dass heißt der Aktuator wird lediglich im Falle einer Überschreitung des maximal erlaubten Lenkeinschlags durch die elektronische Steuereinheit aktiviert und der aktuelle Lenkeinschlag korrigiert. Denkbar ist es jedoch auch, in gewissen Situationen, beispielsweise beim Rangieren des Fahrzeugs in engen Räumen oder Stallungen, eine Korrektur des Lenkeinschlags durch aktives Erhöhen des Lenkeinschlags vorzusehen, so dass der maximal erlaubte Lenkeinschlag erwirkt wird, ohne dass die Bedienperson aufwändige Lenkaktivitäten durchführen muss. Dies sollte jedoch in Abhängigkeit einer Bedienerfreigabe (beispielsweise durch einen Aktivierungsschalter) und in Abhängigkeit der Fahrzeuggeschwindigkeit ermöglicht werden. Ferner kann generell eine Aktivierungseinrichtung, beispielsweise ein Aktivierungsschalter, vorgesehen sein, durch die generell erst die oben beschriebene aktive Korrektur des Lenkeinschlags aktiviert wird, so dass die oben beschriebenen Vorgänge erst durch die Bedienperson freigegeben werden müssen. Durch die erfindungsgemäße Ausbildung des eingangs genannten landwirtschaftlichen Fahrzeugs kann in jeder Betriebssituation des Fahrzeugs, also in jeder Position der Fahrzeugachse, d.h. Pendelstellung und/oder Federweg relativ zum Fahrzeugrahmen, ein maximaler Lenkeinschlage (Lenkeinschlagwinkel) über den gesamten Feder- und oder Pendelweg (Verschwenkweg bzw. Schwenkweg) der Fahrzeugachse ausgenutzt werden, wodurch der Wenderadius des Fahrzeugs optimiert wird. Die Fahrzeugachse ist als Pendelachse mit wenigstens zwei mit einem Rad bestückten Achsschenkeln ausgebildet, derart, dass die Mittel zur Erfassung der aktuellen Position der Fahrzeugachse einen Pendelwinkel relativ zum Fahrzeugrahmen ermitteln bzw. erfassen. Dabei kann die Pendelachse sowohl als mittig zum Fahrzeugrahmen aufgehängte Pendelachse als auch als beidseitig am Fahrzeugrahmen aufgehängte Pendelachse (getrenntes Schwenkachsenpaar) ausgeführt sein. Eine mittig zum Fahrzeugrahmen aufgehängte Pendelachse ist starr ausgebildet, wobei sich die Achsenden beidseitig vom Fahrzeugrahmen zu den Rädern erstrecken. Bei beidseitig des Fahrzeugrahmens aufgehängten Pendelachsen handelt es sich im eigentlichen Sinne um ein Schwenkachsenpaar, wobei auf jeder Seite des Fahrzeugrahmens sich jeweils eine Schwenkachse getrennt von der anderen zu dem jeweiligen Rad bzw. einer jeweiligen Radaufhängung erstreckt.

In einer weiteren Ausgestaltung der Erfindung ist die Fahrzeugachse als gefederte Fahrzeugachse ausgebildet, wobei die Mittel zur Erfassung der aktuellen Position der Fahrzeugachse einen Federweg relativ zum Fahrzeugrahmen erfassen. Dabei kann die Fahrzeugachse als eine mittig zum Fahrzeugrahmen aufgehängte Pendelachse oder als getrennte beidseitig aufgehängte Pendelachse (Schwenkachsenpaar) ausgebildet sein.

Vorzugsweise ist die Begrenzung des Lenkeinschlags in Abhängigkeit von in der Steuereinheit hinterlegten Daten generierbar, wobei die Daten die maximalen (zulässigen) Lenkeinschläge (maximale (zulässige) Lenkeinschlagwinkel) repräsentieren und wobei die maximalen Lenkeinschläge in Abhängigkeit der Position der Fahrzeugachse relativ zum Fahrzeugrahmen definiert sind.

Vorzugsweise ist die erste und/oder zweite Lenkeinrichtung als mechanische oder elektromechanische, als elektrische, als hydraulische oder elektrohydraulische oder als pneumatische oder elektropneumatische Lenkeinrichtung ausgebildet.

Ferner erfolgt die Überlagerung der Stellgrößen beider Lenkeinrichtungen vorzugsweise durch ein Überlagerungsgetriebe, so dass parallel zu einer durch die Bedienperson über die erste Lenkeinrichtung hervorgerufene Stellgröße (Lenkbefehl) der aktuelle Lenkeinschlag aktiv über die durch die zweite Lenkeinrichtung hervorgerufene Stellgröße (Lenkeinschlagkorrekturbefehl) korrigiert werden kann.

Vorzugsweise umfassen die Mittel zur Erfassung des aktuellen Lenkeinschlags Winkelsensoren, die den Drehwinkel eines Achsschenkels und/oder die Stellung der Achschenkellenkung erfassen bzw. signalisieren. Beispielsweise kann zur Erfassung der Stellung der Achsschenkellenkung mittels eines Positionssensors die Position einer der Achsschenkellenkung zugehörigen Spurstange ermittelt werden. Ferner ist es auch möglich andersartige Sensoren an gleicher oder anderer Stelle bzw. gleiche Sensoren an andersartiger Stele vorzusehen, die einen Drehwinkel des Achsschenkels oder den Lenkeinschlag als solchen erfassen.

Vorzugsweise umfassen die Mittel zur Erfassung der aktuellen Position einer Fahrzeugachse Winkelsensoren, die den Verschwenkwinkel einer Fahrzeugachse erfassen bzw. signalisieren. Ferner ist es auch möglich andersartige Sensoren an gleicher oder anderer Stelle bzw. gleiche Sensoren an andersartiger Stelle vorzusehen, die den Verschwenkwinkel der Fahrzeugachse erfassen.

Vorzugsweise erfolgt die Korrektur durch die zweite Stellgröße in Abhängigkeit von einer Fahrgeschwindigkeit des Fahrzeugs, so dass zum Beispiel ein aktives Rücklenken (Korrektur des Lenkeinschlags) nur bei bestimmten Fahrgeschwindigkeiten erfolgt und ein maximal möglicher Lenkeinschlag in gewissen Geschwindigkeitsbereichen ohne Korrektur freigegeben wird.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

### Es zeigt:

- Fig. 1: eine schematische Frontansicht eines erfindungsgemäßen landwirtschaftlichen Fahrzeugs und
- Fig. 2: eine schematische Draufsicht des Fahrzeugs aus Figur 1 mit einer schematischen Anordnung eines Lenksystems.

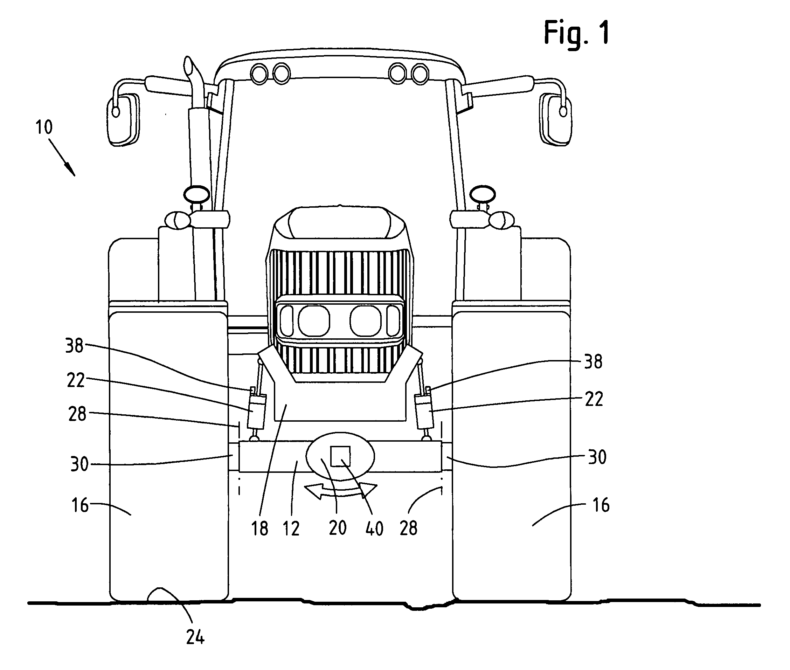

Figur 1 zeigt ein erfindungsgemäßes landwirtschaftliches Fahrzeug 10 in Form eines Traktors, wobei es sich auch um andere landwirtschaftliche Fahrzeuge, wie z. B. um Erntemaschinen, Lademaschinen oder selbstfahrende Feldspritzen handeln könnte.

Das Fahrzeug 10 weist eine Fahrzeugachse 12 mit an ihr über eine Achsschenkellenkung 14 lenkbar angeordnete Räder 16. Die Fahrzeugachse 12 ist als Pendelachse ausgebildet und weist ein mittig zum Fahrzeugrahmen 18 angeordnetes Pendel- oder Schwenklager 20 auf.

Zwischen dem Fahrzeugrahmen 18 und der Fahrzeugachse 12 erstrecken sich beidseitig des Fahrzeugrahmens 18 Federungszylinder 22, die eine Federung der als Pendelachse ausgebildeten Fahrzeugachse 12 darstellen. Die Fahrzeugachse 12 kann sich somit vertikal in Richtung einer Radaufstandsfläche 24 (Bodenoberfläche) relativ zum Fahrzeugrahmen 18 verschieben und gleichzeitig um eine einer Fahrzeuglängsachse 26 parallelen Schwenkachse verschwenken bzw. sich um diese pendelnd bewegen.

Die Enden der Fahrzeugachse 12 sind über Schwenkachsen 28 schwenkbar mit Radachsen 30 verbunden, auf denen die Räder 16 aufgehängt sind. Die Radachsen 30 sind fest mit Achsschenkeln 32 verbunden, derart, dass durch Bewegen bzw. Verschwenken der Achsschenkel 32 um die Schwenkachsen 28 ein Verschwenken der Radachsen 30 und damit der Räder 16 ausgelöst wird. Das freie Ende eines jeweiligen Achsschenkels 32 ist jeweils mit einem Ende einer Spurstange 34 verbunden, so dass die Achsschenkel 32 über die Spurstange 34 gelenkig miteinander verbunden sind und die oben genannte Achsschenkellenkung 14 bilden. Durch seitliches Verschieben der Spurstange 34 wird ein Verschwenken der Achsschenkel 32 und damit eine entsprechende Lenkbewegung bzw. ein entsprechender Lenkeinschlag ausgelöst.

An der Spurstange 34 ist ein Positionssensor 36 angeordnet, der die Position der Spurstange 34 bzw. eine Verschiebung der Spurstange 34 ermittelt bzw. erfasst und somit ein Mittel zur Erfassung bzw. Ermittlung eines aktuellen Lenkeinschlags an den Rädern 16 darstellt.

An den Federungszylindern 22 sind weitere Positionssensoren 38 angeordnet, die die vertikale Bewegung der Fahrzeugachse 12 relativ zum Fahrzeugrahmen 18 ermitteln bzw. erfassen und somit einen Federungszustand (Federungsstellung) der Fahrzeugachse wiedergeben.

Ferner ist an der Fahrzeugachse 12 im Bereich des Schwenklagers 20 ein Winkelsensor 40 angeordnet, durch den eine Pendelstellung bzw. ein Pendelwinkel der Fahrzeugachse 12 relativ zum Fahrzeugrahmen 18 ermittelt bzw. erfasst wird.

Die Positionssensoren 38 und der Winkelsensor 40 stellen dabei Mittel dar, die zur Ermittlung bzw. Erfassung der aktuellen Position der Fahrzeugachse 12 relativ zum Fahrzeugrahmen 18 herangezogen werden. Als Positionssensoren 38 bzw. Winkelsensoren 40 können z. B. magnetische bzw. magnetinduktive Sensoren oder auch induktive oder kapazitive Wegaufnehmer sowie Potentiometer oder andere elektromechanische Sensoren eingesetzt werden.

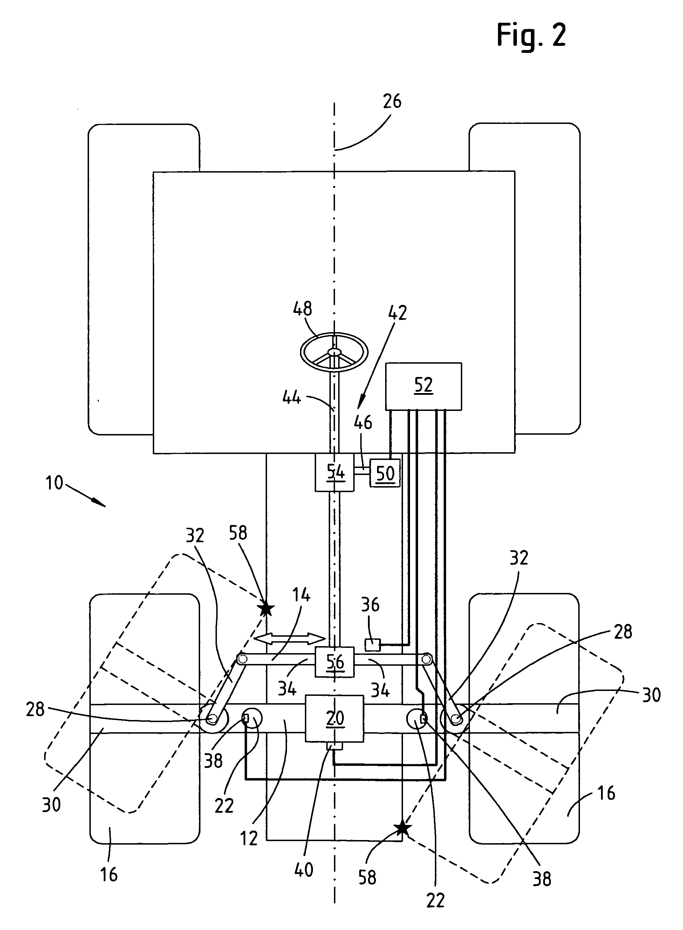

Die Spurstange 34 ist mit einem Lenksystem 42 verbunden, dessen Aufbau schematisch in Figur 2 dargestellt ist. Das Lenksystem 42 umfasst eine erste Lenkeinrichtung 44 und eine zweite Lenkeinrichtung 46. Die erste Lenkeinrichtung 44 ist von einer Bedienperson über ein Lenkrad 48 des Fahrzeugs 10 (oder alternativer Weise auch über andere Lenkmittel, wie z.B. über einen Lenkhebel oder Joystick) betätigbar, wodurch eine erste Stellgröße erzeugt wird. Die zweite Lenkeinrichtung 46 wird von einem Aktuator 50 betätigt, der von einer elektronischen Steuereinheit 52 ansteuerbar ist und durch welchen eine zweite Stellgröße erzeugt wird. Der Aktuator 50 kann als elektrischer Motor ausgebildet sein. Alternativ kann auch ein andersartiger, beispielsweise ein hydraulisch oder pneumatisch gesteuerter Motor vorgesehen sein.

Ferner umfasst das Lenksystem 42 ein Überlagerungsgetriebe 54, in welchem die erste und zweite Stellgröße zu einer Gesamtstellgröße überlagert. Die Gesamtstellgröße bestimmt dann den resultierenden Lenkeinschlag der Achsschenkellenkung 14, wobei die Gesamtstellgröße über ein die Spurstange 34 betätigendes Lenkgetriebe 56 auf die Achsschenkellenkung 14 übertragen wird.

Die elektronische Steuereinheit 52 ist mit den Sensoren 36, 38, 40 verbunden und generiert bei Bedarf ein Korrektursignal bzw. Steuersignal zur Ansteuerung des Aktuators 50. In der elektronischen Steuereinheit 52 sind Daten hinterlegt, die entsprechende maximale Lenkeinschläge in Abhängigkeit von einem aktuellen Lenkeinschlag und von einer aktuellen Position der Fahrzeugachse 12 definieren. Sollte der aktuelle Lenkeinschlag, welcher von der Steuereinheit 52 online registriert bzw. erfasst wird, für eine bestimmte Betriebssituation den in Abhängigkeit von der aktuellen Position der Fahrzeugachse 12 ermittelten maximalen Lenkeinschlag überschreiten, so generiert die elektronische Steuereinheit 52 ein entsprechendes Korrektursignal (Steuersignal) für den Lenkeinschlag, durch welches der Aktuator 50 aktiviert wird und seinerseits eine entsprechende zweite Stellgröße erzeugt, die wiederum der ersten Stellgröße überlagert wird. Die elektronische Steuereinheit 52 korrigiert somit den aktuellen Lenkeinschlag, sobald für eine bestimmte Betriebssituation bezüglich der Position der Fahrzeugachse 12 der maximale Lenkeinschlag erreicht bzw. überschritten wird, wobei das Korrektursignal basierend auf den Sensorsignalen der am Fahrzeug 10 bzw. am Lenksystem 42 angeordneten Positions- und Winkelsensoren 36, 38, 40 generiert wird.

Die in der elektronischen Steuereinheit 52 hinterlegten Daten bezüglich der maximalen Lenkeinschläge sind in Abhängigkeit von den geometrischen Abmessungen des Fahrzeugs 10 und der zu lenkenden Räder 16 individuell zu bestimmen und in die elektronische Steuereinheit 52 einzuspeisen. Exemplarisch sind zur Verdeutlichung der Problematik einer Kollision der Räder 16 mit dem Fahrzeugrumpf in Figur 2 Kollisionspunkte 58 für eine bestimmte Position der Fahrzeugachse 16 dargestellt, wobei sich der maximale Lenkeinschlag (der maximal zugelassene Lenkeinschlag, ohne dass eine Kollision der Räder 16 mit dem Fahrzeugrumpf eintritt) sich stets in Abhängigkeit von der Position bzw. Federungslage der Fahrzeugachse 12 verändert.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Landwirtschaftliches Fahrzeug (10) mit einem Fahrzeugrahmen (18), wenigstens einer Fahrzeugachse (12), die wenigstens einen mit einem Rad (16) bestückten Achsschenkel (32) aufweist, wobei die wenigstens eine Fahrzeugsachse (12) gegenüber dem Fahrzeugrahmen (18) vertikal bewegbar aufgehängt ist und das Rad (16) über eine Achsschenkellenkung (14) lenkbar angeordnet ist, einer elektronischen Steuereinheit (52) und einem an der Achsschenkellenkung (14) einen Lenkeinschlag erzeugendem Lenksystem (42), wobei das Lenksystem (42) eine von einer Bedienperson bedienbare und eine Stellgröße erzeugende erste Lenkeinrichtung (44) sowie eine zweite Lenkeinrichtung (46) umfasst, wobei die zweite Lenkeinrichtung (46) von einem von der elektronischen Steuereinheit (52) ansteuerbaren Aktuator (50) betreibbar ist, der eine zweite Stellgröße erzeugt, wobei die Stellgrößen beider Lenkeinrichtungen (44, 46) zu einer den Lenkeinschlag an der Achsschenkellenkung (14) erzeugenden Gesamtstellgröße überlagerbar sind und wobei Mittel (36) zur Erfassung des aktuellen Lenkeinschlags und Mittel (38, 40) zur Erfassung der aktuellen Position der wenigstens einen Fahrzeugachse (12) relativ zum Fahrzeugrahmen (18) vorgesehen sind, und die Steuereinheit (52) derart ausgebildet ist, dass durch Ansteuerung des Aktuators (50) eine Begrenzung des Lenkeinschlags in Abhängigkeit von dem aktuellen Lenkeinschlag und von der aktuellen Position der wenigstens einen Fahrzeugachse (12) erzielbar ist, **dadurch gekennzeichnet, dass** die Fahrzeugachse (12) als Pendelachse mit wenigstens zwei mit einem Rad (16) bestückten Achsschenkeln (32) ausgebildet ist und die Mittel (38, 40) zur Erfassung der aktuellen Position der Fahrzeugachse (12) einen Pendelwinkel relativ zum Fahrzeugrahmen (18) erfassen.

2. Landwirtschaftliches Fahrzeug (10) nach Anspruch 1, **dadurch gekennzeichnet, dass** die Fahrzeugachse (12) als gefederte Fahrzeugachse (12) ausgebildet ist und die Mittel (38, 40) zur Erfassung der aktuellen Position der Fahrzeugachse (12) einen Federweg relativ zum Fahrzeugrahmen (18) erfassen.

3. Landwirtschaftliches Fahrzeug (10) nach einem der Ansprüche 1 oder 2, **dadurch gekennzeichnet, dass** die Begrenzung des Lenkeinschlags in Abhängigkeit von in der Steuereinheit (52) hinterlegten Daten generierbar ist, wobei die Daten die maximalen Lenkeinschläge repräsentieren und wobei die maximalen Lenkeinschläge in Abhängigkeit der Position der Fahrzeugachse (12) relativ zum Fahrzeugrahmen (18) definiert sind.

4. Landwirtschaftliches Fahrzeug (10) nach einem der vorhergehenden Ansprüche, **dadurch gekennzeichnet, dass** die erste und/oder zweite Lenkeinrichtung (44, 46) als mechanische oder elektromechanische, als elektrische, als hydraulische oder elektrohydraulische oder als pneumatische oder elektropneumatische Lenkeinrichtung (44, 46) ausgebildet ist.

5. Landwirtschaftliches Fahrzeug (10) nach einem der vorhergehenden Ansprüche, **dadurch gekennzeichnet, dass** die Überlagerung der Stellgrößen beider Lenkeinrichtungen (44, 46) durch ein Überlagerungsgetriebe (54) erfolgt.

6. Landwirtschaftliches Fahrzeug (10) nach einem der vorhergehenden Ansprüche, **dadurch gekennzeichnet, dass** die Mittel (36) zur Erfassung des aktuellen Lenkeinschlags Sensoren umfassen, die den Drehwinkel eines Achsschenkels (32) und/oder die Stellung der Achsschenkellenkung (14) erfassen bzw. signalisieren.

7. Landwirtschaftliches Fahrzeug (10) nach einem der vorhergehenden Ansprüche, **dadurch gekennzeichnet, dass** die Mittel (38, 40) zur Erfassung der aktuellen Position einer Fahrzeugachse Winkelsensoren umfassen, die den Verschwenkwinkel oder Pendelwinkel einer Fahrzeugachse erfassen bzw. signalisieren.

8. Landwirtschaftliches Fahrzeug (10) nach einem der vorhergehenden Ansprüche, **dadurch gekennzeichnet, dass** die zweite Stellgröße in Abhängigkeit von einer Fahrgeschwindigkeit des Fahrzeugs (10) erzeugbar ist.

## Claims

1. Agricultural vehicle (10) with a vehicle frame (18), at least one vehicle axle (12), which has at least one stub axle (32) equipped with a wheel (16), wherein the at least one vehicle axle (12) is suspended so as to be vertically movable with respect to the vehicle frame (18), and the wheel (16) is arranged so as to be steerable by means of a stub axle steering system (14), an electronic control unit (52) and a steering system (42) which generates a steering lock at the stub axle steering system (14), wherein the steering system (42) comprises a first steering device (44) which can be operated by an operator and which generates a manipulated variable, and a second steering device (46), wherein the second steering device (46) can be operated by an actuator (50) which can be actuated by the electronic control unit (52) and which generates a second manipulated variable, wherein the manipulated variables of the two steering devices (44, 46) can be superimposed to form a total manipulated variable which generates the steering lock at the stub axle steering system (14), and wherein means (36) are provided for sensing the current steering lock, and means (38, 40) are provided for sensing the current position of the at least one vehicle axle (12) relative to the vehicle frame (18), and the control unit (52) is embodied in such a way that by actuating the actuator (50) it is possible to limit the steering lock as a function of the current steering lock and of the current position of the at least one vehicle axle (12), **characterized in that** the vehicle axle (12) is embodied as a swing axle with at least two stub axles (32) which are equipped with a wheel (16), and the means (38, 40) for sensing the current position of the vehicle axle (12) sense a swing angle relative to the vehicle frame (18).

2. Agricultural vehicle (10) according to Claim 1, **characterized in that** the vehicle axle (12) is embodied as a sprung vehicle axle (12), and the means (38, 40) for sensing the current position of the vehicle axle (12) sense a spring travel relative to the vehicle frame (18).

3. Agricultural vehicle (10) according to one of Claims 1 and 2, **characterized in that** the limitation of the steering lock can be generated as a function of data stored in the control unit (52), wherein the data represents the maximum steering locks, and wherein the maximum steering locks are defined as a function of the position of the vehicle axle (12) relative to the vehicle frame (18).

4. Agricultural vehicle (10) according to one of the preceding claims, **characterized in that** the first and/or second steering device (44, 46) is embodied as a mechanical or electromechanical, as an electrical, as a hydraulic or as an electrohydraulic or as a pneumatic or electropneumatic steering device (44, 46).

5. Agricultural vehicle (10) according to one of the preceding claims, **characterized in that** the superimposition of the manipulated variables of the two steering devices (44, 46) is effected by means of a variable ratio gear unit (54).

6. Agricultural vehicle (10) according to one of the preceding claims, **characterized in that** the means (36) for sensing the current steering lock comprise sensors which sense or signal the rotational angle of a stub axle (32) and/or the position of the stub axle steering system (14).

7. Agricultural vehicle (10) according to one of the preceding claims, **characterized in that** the means (38, 40) for sensing the current position of a vehicle axle comprise angle sensors which sense or signal the pivoting angle or swing angle of a vehicle axle.

8. Agricultural vehicle (10) according to one of the preceding claims, **characterized in that** the second manipulated variable can be generated as a function of a velocity of the vehicle (10).

## Revendications

1. Véhicule agricole (10) doté d'un châssis de véhicule (18), d'au moins un essieu de véhicule (12), comportant au moins un bord d'essieu (32) équipé d'une roue (16), l'au moins un essieu de véhicule (12) étant suspendu de façon à pouvoir être déplacé verticalement par rapport au châssis de véhicule (18) et la roue (16) étant disposée de façon à pouvoir être commandée via une commande de bord d'essieu (14), d'une unité de commande électronique (52) et d'un système de direction (42) produisant un impact de direction au niveau de la commande de bord d'essieu (14), le système de direction (42) comprenant un premier dispositif de direction (44) produisant une grandeur de déplacement et pouvant être commandé par un conducteur ainsi qu'un deuxième dispositif de direction (46), le deuxième dispositif de direction (46) pouvant être entraîné par un actionneur (50) pouvant être commandé par l'unité de commande électronique (52) et produisant une deuxième grandeur de déplacement, les grandeurs de déplacement des deux dispositifs de direction (44, 46) pouvant être transférées en une grandeur de déplacement totale produisant l'impact de direction au niveau de la commande de bord d'essieu (14) et des moyens (36) de détection de l'impact de direction actuel et des moyens (38, 40) de détection de la position actuelle de l'au moins un essieu de véhicule (12) par rapport au châssis de véhicule (18) étant prévus et l'unité de commande (52) étant réalisée de telle sorte qu'une limitation de l'impact de direction peut être obtenue à partir de la position actuelle de l'au moins un essieu de véhicule (12) et en fonction de l'impact de direction actuel, par commande de l'actionneur (50), **caractérisé en ce que** l'essieu de véhicule (12) prend la forme d'un essieu pendulaire doté d'au moins deux bords d'essieu (32) pourvus d'une roue (16) et les moyens (38, 40) de détection de la position actuelle de l'essieu de véhicule (12) détectant un angle pendulaire par rapport au châssis de véhicule (18).

2. Véhicule agricole (10) selon la revendication 1, **caractérisé en ce que** l'essieu de véhicule (12) prend la forme d'un essieu de véhicule (12) contraint par ressort et que les moyens (38, 40) de détection de la position actuelle de l'essieu de véhicule (12) détectent une course de ressort par rapport au châssis de véhicule (18).

3. Véhicule agricole (10) selon l'une quelconque des revendications 1 ou 2, **caractérisé en ce que** la limitation de l'impact de direction peut être générée en fonction des données mémorisées dans l'unité de commande (52), les données représentant les impacts de direction maximaux et les impacts de direction maximaux étant définis en fonction de la position de l'essieu de véhicule (12) par rapport au châssis de véhicule (18).

4. Véhicule agricole (10) selon l'une quelconque des revendications précédentes, **caractérisé en ce que** le premier et/ou le deuxième dispositif de direction (44, 46) prend la forme d'un dispositif de direction (44, 46) mécanique ou électromécanique, électrique, hydraulique ou électrohydraulique ou pneumatique ou électropneumatique.

5. Véhicule agricole (10) selon l'une quelconque des revendications précédentes, **caractérisé en ce que** la juxtaposition des grandeurs de déplacement des deux dispositifs de direction (44, 46) se produit par le biais d'un engrenage de juxtaposition (54).

6. Véhicule agricole (10) selon l'une quelconque des revendications précédentes, **caractérisé en ce que** les moyens (36) de détection de l'impact de direction actuel comprennent des capteurs détectant et/ou signalant l'angle de rotation d'un bord d'essieu (32) et/ou la position de la commande de bord d'essieu (14).

7. Véhicule agricole (10) selon l'une quelconque des revendications précédentes, **caractérisé en ce que** les moyens (38, 40) de détection de la position actuelle d'un essieu de véhicule comprennent des capteurs angulaires détectant et/ou signalant l'angle de pivotement ou l'angle pendulaire d'un essieu de véhicule.

8. Véhicule agricole (10) selon l'une quelconque des revendications précédentes, **caractérisé en ce que** la deuxième grandeur de déplacement peut être produite en fonction de la vitesse de conduite du véhicule (10).
